Europäisches Patentamt

European Patent Office

Office européen des brevets

(19)

(11) **EP 1 241 466 A1**

(12) # DEMANDE DE BREVET EUROPEEN

(43) Date de publication:
**18.09.2002 Bulletin 2002/38**

(51) Int Cl.⁷: **G01N 21/89**, G01N 21/55

(21) Numéro de dépôt: **01870047.6**

(22) Date de dépôt: **13.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Malaise, Daniel**
**4890 Thimister-Clermont (BE)**

(72) Inventeur: **Malaise, Daniel**
**4890 Thimister-Clermont (BE)**

(74) Mandataire: **Van Malderen, Michel et al**
**Office van Malderen**
**85/043 Boulevard de la Sauvenière**
**4000 Liège (BE)**

(54) **Dispositif et procédé optoélectronique de mesure en temps réel de la lumière diffusée par une surface en défilement**

(57)     La présente invention concerne un dispositif et un procédé optoélectronique de mesure en temps réel de la lumière réfléchie et/ou diffusée par une surface essentiellement plane, en défilement, de préférence continu, comportant une tête optique, accouplée à un dispositif électromécanique de mise au point, caractérisé en ce que ledit dispositif est pourvu de moyens permettant :

- d'illuminer ladite surface avec au moins deux, de préférence trois, faisceaux laser émanant de sources (1,2,3) situées dans au moins un, de préférence deux, plans d'incidence, un plan d'incidence principal et un plan d'incidence secondaire respectivement, lesdits faisceaux formant au moins deux angles d'incidence différents avec la normale à ladite surface ;

- de mesurer la lumière réfléchie et/ou diffusée par ladite surface suivant au moins 5, de préférence 8, angles.

FIG. 1

EP 1 241 466 A1

**Description**

**Objet de l'invention**

La présente invention se rapporte à un nouveau dispositif optoélectronique de mesure de la lumière diffusée par une surface en défilement, en vue de déterminer des caractéristiques de la surface telles que sa rugosité ($R_a$) ou sa composition chimique, ainsi que les variations de ces caractéristiques.

La présente invention se rapporte également au procédé mis en oeuvre par le dispositif optoélectronique.

**Arrière-plan technologique et état de la technique**

On connaît des dispositifs de contrôle en temps réel de la structure superficielle d'un produit plat défilant, comme par exemple une tôle.

Un premier problème technique à résoudre est de recueillir le plus possible d'informations relatives à la surface, afin de pouvoir traiter les procédés les plus variés. Ainsi, une installation de galvanisation par exemple, travaillera successivement sur une douzaine de procédés différents et pourra donc à tout moment être amenée à traiter un nouveau procédé. Il est donc primordial que la tête de mesure puisse s'adapter à toutes les situations rencontrées moyennant un étalonnage et un paramétrage aisés.

Les applications visées ici mettent souvent en jeu des rouleaux de pression, comme dans les laminoirs par exemple. La structure du fini de surface est donc souvent fortement directionnelle, aussi bien sur le rouleau que sur le produit fini. Les appareils existants, basés sur la mesure de lumière diffusée, sont alors insuffisants car ils ne comportent généralement qu'un nombre très limité de sources ou de détecteurs ou encore ne travaillent que dans un seul plan d'incidence.

Un second problème majeur est de permettre à la tête de mesure de fonctionner, sans dégradation sensible des résultats, pendant plusieurs mois, dans une atmosphère généralement hostile pour des mesures optiques. Il faut donc que la tête soit insensible aux pollutions par des poussières ou de la vapeur d'huile ou ne soit pas gênée par la lumière ambiante variable. Or les appareils existants sont sensibles à cette pollution et requièrent dès lors d'importants coûts de maintenance pour conserver leur précision.

**Buts de l'invention**

La présente invention a pour but de proposer un dispositif permettant de s'affranchir des inconvénients de l'état de la technique.

En particulier, l'invention a pour but de proposer un dispositif présentant une souplesse d'adaptation à tout problème de contrôle en temps réel de la structure de surface d'un produit défilant.

Enfin l'invention a pour but de proposer une solution à faible coût aux problèmes de pollution émanant de l'environnement de mesure ainsi qu'aux problèmes de bruit lumineux.

**Principaux éléments caractéristiques de l'invention**

La présente invention se rapporte à un dispositif optoélectronique de mesure en temps réel de la lumière réfléchie et/ou diffusée par une surface essentiellement plane, en défilement, de préférence continu, comportant une tête optique, accouplée à un dispositif électromécanique de mise au point, caractérisé en ce que ledit dispositif est pourvu de moyens permettant :

- d'illuminer ladite surface avec au moins deux, de préférence trois, faisceaux laser émanant de sources situées dans au moins un, de préférence deux, plan(s) d'incidence, un plan d'incidence principal et un plan d'incidence secondaire respectivement, lesdits faisceaux formant au moins deux angles d'incidence différents avec la normale à ladite surface ;
- de mesurer la lumière réfléchie et/ou diffusée par ladite surface suivant au moins 5, de préférence 8, angles.

Avantageusement, le plan d'incidence principal est essentiellement parallèle à la direction de défilement de ladite surface et le plan d'incidence secondaire est essentiellement perpendiculaire à ladite direction, les deux plans étant essentiellement perpendiculaires à la surface en défilement.

Toujours avantageusement, la direction d'un faisceau, émis par au moins une source dans chacun des deux plans d'incidence, forme, par rapport à la normale à ladite surface, un angle, dit de faible incidence, inférieur à chacun des angles, dits de grande incidence, formés par les faisceaux correspondants aux autres sources.

De manière particulièrement avantageuse, lesdits angles de faible incidence sont compris entre 5 et 30°.

De préférence, lesdits angles de grande incidence sont compris entre 50 et 75°.

Toujours préférentiellement, ledit angle de faible incidence est le même dans le plan d'incidence principal et dans le plan d'incidence secondaire.

Selon une forme d'exécution préférée de l'invention, ledit dispositif comporte au moins quatre détecteurs situés dans le plan d'incidence principal et au moins quatre détecteurs situés dans le plan d'incidence secondaire, la disposition de chaque détecteur définissant un angle moyen de détection par rapport à la normale à ladite surface.

De préférence, dans chacun des deux plans :

- un premier détecteur est dirigé suivant la normale à ladite surface et est commun au plan d'incidence principal et au plan d'incidence secondaire ;

- un deuxième détecteur forme un angle de détection égal à l'angle de faible incidence, à l'opposé de la source par rapport à la normale ;
- un troisième détecteur forme un angle de détection supérieur à l'angle de faible incidence, à l'opposé de la source par rapport à la normale ;
- un quatrième détecteur forme un angle de détection supérieur à l'angle de faible incidence, de préférence égal en valeur absolue à l'angle de détection du troisième détecteur, du même côté que la source, par rapport à la normale.

Un détecteur supplémentaire peut être prévu avec un angle de détection par rapport à la normale supérieur aux angles de détection des autres détecteurs, de préférence égal à l'angle de grande incidence.

Avantageusement, chaque source comprend une diode laser, une lentille et un baffle, toutes les diodes laser émettant un rayonnement à la même longueur d'onde. Ledit deuxième détecteur est un détecteur de position, de préférence à quatre quadrants ou PSD, muni d'une lentille de focalisation. Lesdits premier, troisième, quatrième détecteur et le détecteur supplémentaire sont des récepteurs au silicium avec préamplificateur incorporé. Chaque détecteur comprend en outre un filtre interférentiel de bande passante centrée sur la longueur d'onde des diodes laser, de préférence une cavité noire allongée usinée dans la masse de la tête optique, de préférence munie d'un baffle et terminée par un petit orifice, donnant sur la surface à mesurer.

Selon une réalisation particulière du dispositif de l'invention, celui-ci comporte des moyens destinés à faire circuler un flux d'air propre dans ladite cavité, entre un second orifice et ledit petit orifice de terminaison.

Avantageusement, la tête optique forme un ensemble solidaire avec une glissière motorisée, présentant un mouvement perpendiculaire à la surface et commandée par une boucle de contrôle PID, ladite boucle étant activée par un signal d'erreur fourni par un desdits deuxièmes détecteurs, en vue de maintenir la focalisation correcte de ladite tête. Ledit ensemble est lui-même monté sur une seconde glissière motorisée dont l'axe de déplacement est parallèle à la surface en défilement et perpendiculaire au sens de défilement.

Cette glissière permet alors de positionner la tête optique sur toute la largeur de la tôle ou d'imprimer au point test une courbe explorant toute la surface de la tôle en combinant le mouvement continu de défilement avec un mouvement continu alternatif de la tête.

Selon une autre caractéristique de l'invention, ledit dispositif comporte des moyens de traitement de mesures, de préférence d'albédo et de rugosité, utilisant une source à faible incidence pour normaliser les signaux obtenus à partir d'au moins une source à grande incidence, de préférence en vue de rendre les mesures de rugosité insensibles à l'albédo de la surface.

Un autre aspect de la présente invention concerne un procédé de mesure en temps réel de la lumière réfléchie et/ou diffusée par une surface essentiellement plane, en défilement, de préférence continu, au moyen du dispositif de l'invention, caractérisé en ce que, successivement ou alternativement :

- on mesure l'albédo de ladite surface au moyen de sources de faible incidence situées dans chaque plan d'incidence, l'angle d'incidence correspondant étant de préférence compris entre 5 et 30° ;
- on mesure, au moyen d'autres sources, un signal proportionnel à l'albédo et contenant l'information de rugosité de ladite surface, l'information de rugosité étant obtenue en divisant ledit signal par l'albédo, l'angle d'incidence correspondant aux autres sources étant de préférence compris entre 50 et 75° ;
- on utilise une source à faible incidence combinée à un desdits deuxième détecteurs pour obtenir une mesure de distance entre la tête optique et ladite surface en défilement ;
- on calcule le $R_a$ en faisant le rapport d'une combinaison linéaire ou d'une autre fonction quelconque des signaux obtenus, lorsque la source à grande incidence est allumée, et d'une combinaison linéaire ou une autre fonction quelconque des signaux obtenus, lorsqu'une des sources à faible incidence est allumée.

## Brève description des dessins

La figure 1 représente une vue en perspective et en coupe dans le plan d'incidence principal du dispositif selon l'invention.

La figure 2 représente une vue en perspective et en coupe dans le plan d'incidence secondaire du dispositif selon l'invention.

La figure 3 est un schéma de principe de la chaîne électronique du dispositif selon l'invention.

## Description détaillée de l'invention

Le principe à la base de l'invention est de mesurer, dans deux plans d'incidence perpendiculaires, la diffusion de la surface mesurée à un certain nombre d'angles situés de part et d'autre de la direction spéculaire.

Un des plans d'incidence, dit plan d'incidence principal, est choisi parallèle à la direction de défilement de la tôle. L'autre plan d'incidence, dit plan d'incidence secondaire, est choisi perpendiculaire à cette direction. Les plans d'incidence principal et secondaire sont essentiellement perpendiculaires à la surface de la tôle défilante.

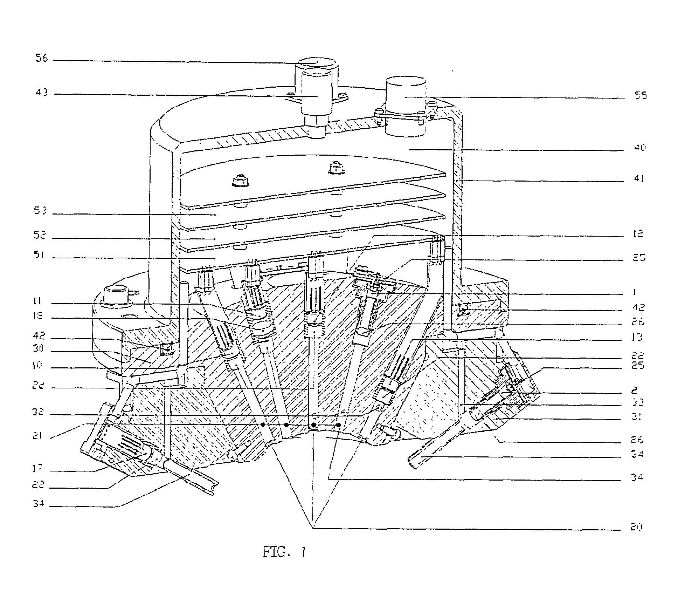

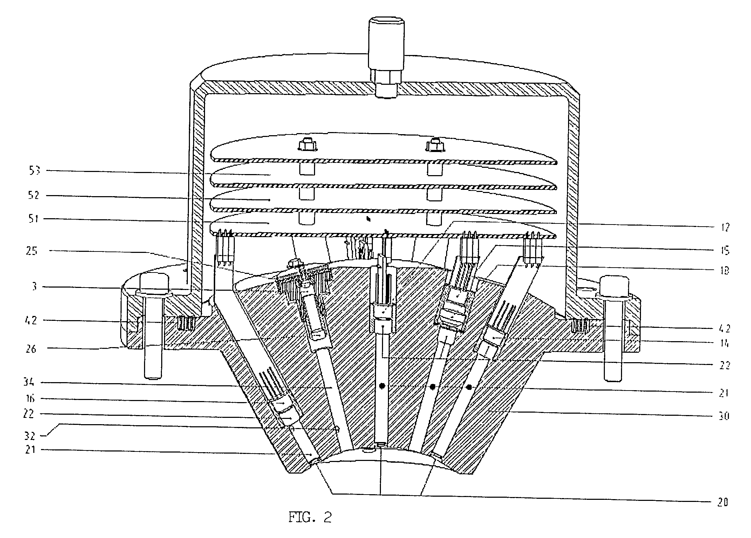

Les figures 1 et 2 représentent la tête optique selon l'invention dans des vues en coupe suivant le plan d'incidence principal et secondaire respectivement.

Le dispositif comprend, dans le plan d'incidence principal, deux sources lumineuses 1,2 positionnées à des angles d'incidence différents, par rapport à la normale de la tôle. La source 1 est positionnée à un angle faible, typiquement compris entre 5° et 30°. La source 2 est positionnée à un angle beaucoup plus grand, typiquement compris entre 50° et 75°.

Le dispositif peut aussi comprendre, dans le plan d'incidence secondaire, une seule source 3 positionnée au même angle que la source 1, par rapport à la normale de la tôle.

Les différentes sources sont de préférence des diodes laser dont la lumière émise est polarisée linéairement. Suivant le procédé de l'application à contrôler, le plan de polarisation de chaque source peut être choisi parallèle ou perpendiculaire au plan d'incidence. Il y a donc huit combinaisons possibles de polarisation.

Dans le plan d'incidence principal, il y a cinq détecteurs. Le détecteur 12 est dirigé suivant la normale, le détecteur 11 est situé de façon symétrique par rapport à la source 1 (même angle, mais de l'autre côté de la normale), le détecteur 10 est situé à un angle plus grand par rapport à la normale que le détecteur 11 et le détecteur 13 est situé du même côté que la source 1, au même angle que le détecteur 10 par rapport à la normale. Enfin, un détecteur 17 est situé à un angle extrême, de préférence égal à l'angle de la source 2.

Dans le plan d'incidence secondaire, on trouve le détecteur 12, qui est évidemment commun aux deux plans perpendiculaires. On trouve également les détecteurs 14, 15 et 16 qui se trouvent, par rapport à la source 3, dans des positions équivalentes aux détecteurs 10, 11 et 13 respectivement, par rapport à la source 1.

Chaque détecteur est muni d'un filtre interférentiel 22 isolant une bande étroite centrée sur la longueur d'onde des diodes laser.

De préférence, les directions de mesure de la diffusion sont déterminées par un petit trou 20, de surface quasi-ponctuelle, situé à une distance déterminée de la surface observée dans la direction de mesure, ainsi que par la surface sensible du détecteur 10, 11, 12, 13, 14, 15, 16 et 17. En fait les deux surfaces, correspondant au trou et au détecteur, déterminent l'angle de diffusion moyen et l'angle solide de diffusion. L'espace entre le trou 20 et le détecteur correspondant est occupé par une cavité noire allongée 21. Celle-ci, munie éventuellement d'un baffle intermédiaire, est destinée à absorber complètement la lumière parasite, c'est à dire la lumière non comprise au départ dans l'angle de diffusion. Cette chambre permet aussi d'atténuer, jusqu'à la rendre négligeable, la lumière réfléchie par la surface du détecteur ou du filtre interférentiel associé. Enfin, cette chambre 21 est maintenue en communication avec le corps de l'appareil qui est pressurisé, de manière à refouler efficacement les particules polluantes et les éventuelles projections provenant de l'environnement industriel, avant qu'elles n'atteignent et polluent les parties optiques.

Dans la direction de la réflexion spéculaire, le détecteur 11, 15 est du type à quatre quadrants. Si le procédé observé a une surface spéculaire, les faisceaux réfléchis ne sont centrés sur les deux détecteurs à quatre quadrants que si la tête optique se trouve à la bonne distance et a son axe dirigé suivant la normale à la surface observée.

Selon la présente invention, on utilise une combinaison des signaux de sources à faible incidence (par exemple, 15°) pour caractériser l'albédo du spécimen, c'est à dire la fraction de lumière diffusée et/ou réfléchie par celui-ci. On utilise par contre une combinaison des signaux de la source à grande incidence (par exemple, 60°) pour en caractériser la rugosité moyenne $R_a$.

Les signaux relevés sur les deux détecteurs 11, 15 permettent de corriger la distance et l'assiette (l'angle) de la tête en temps réel. Dans le cas le plus fréquent d'une surface à contrôler diffusante, on dispose une lentille 18 devant chaque détecteur à quadrants 11, 15. Cette lentille permet d'obtenir une image de la tache de diffusion sur le détecteur, de sorte que la distance de la tête au spécimen peut être contrôlée par triangulation. Dans ce cas, l'assiette de la tête n'a pas d'effet sensible sur les mesures et est maintenue mécaniquement par construction.

En fonctionnement, les sources sont allumées séquentiellement et les détecteurs sont lus en parallèle. Ceci permet une grande vitesse d'acquisition des données, avec un rythme de mesure de l'ordre de 10 Hz.

Afin d'éliminer le bruit de l'appareil, les sources sont modulées en fréquence (1000 Hz par exemple). Les circuits d'amplification des détecteurs comprennent des filtres permettant d'éliminer les signaux parasites dont la fréquence est différente de cette fréquence de modulation. Cette méthode, combinée avec la présence de filtres interférentiels sur les détecteurs, constitue un double filtrage qui permet de s'affranchir complètement de la lumière parasite.

La présente invention présente l'avantage d'une adaptation souple à tout problème de contrôle en temps réel de la structure de surface d'un produit défilant.

Le dispositif permet en effet de mesurer huit paramètres dans deux plans d'incidence, chacune des trois sources pouvant être configurée de deux manières.

En outre, le dispositif de l'invention permet de s'affranchir efficacement de la pollution optique (bruit de fond) et de la pollution émanant de l'environnement industriel (projections et poussières).

## Description d'une forme d'exécution préférée de l'invention

### Tête optique

Plus précisément, la figure 1 montre que les logements de la source 1 et des détecteurs 10, 11, 12 et 13, de même que leurs tubes protecteurs 34, sont usinés dans la masse de la partie inférieure de la tête 30. Dans cette forme d'exécution, les angles d'incidence et de diffusion correspondant à la source 1 et au détecteur 11, respectivement, sont de 15°, les angles d'incidence et de diffusion correspondant aux détecteurs 10 et 13, respectivement, sont de 30° par rapport à la normale à la surface défilante.

La source 2 est intégrée à la pièce rapportée 31. L'angle d'incidence correspondant est de 60°. Le détecteur 17 est intégré à la pièce rapportée symétrique 31, également à un angle de 60° par rapport à la normale. Chaque source se compose d'une diode laser 25, dont, par exemple, la longueur d'onde est comprise entre 600 et 800 nm et la puissance est comprise entre 5 et 30 mW, d'une lentille 26 et d'un baffle 34. Les détecteurs 10, 12, 13, 14, 16 et 17 sont des récepteurs au silicium avec préamplificateur incorporé, dont la surface sensible fait environ 5 mm$^2$. Comme mentionné ci-dessus, chaque détecteur est précédé d'un filtre interférentiel 22 centré sur la longueur d'onde des diodes laser.

### *Focalisation*

Les détecteurs spéculaires 11 et 15 sont du type à quatre quadrants non amplifié. Ils sont précédés du même filtre interférentiel que celui des diodes laser. Dans le cas de l'observation des surfaces non polies, ce qui est le cas le plus fréquent, la lentille 18 produit sur le détecteur à quadrants l'image de la tache lumineuse diffusée par la tôle. La position de cette tache permet de mesurer le défaut de focalisation. Le signal de défocalisation est utilisé pour commander une boucle de contrôle qui agit sur une motorisation externe et ramène la tête à la distance correcte par rapport à la tôle (signal de défocalisation nul). On utilise un procédé classique de mesure de distance par triangulation.

### *Protection d'ambiance*

Des orifices 32 du système de protection des optiques sont alésés dans la masse 30 et sont partiellement visibles. Chaque cavité de protection est ainsi mise en contact avec la chambre pressurisée principale 40. Pour la source 2, un alésage 33 met de même le tube de protection 34 en communication avec la cavité pressurisée 40.

La cavité pressurisée 40 est fermée par un couvercle étanche 41 muni d'un joint torique 42. L'air filtré sous pression est injecté par un connecteur 43.

### *Electronique*

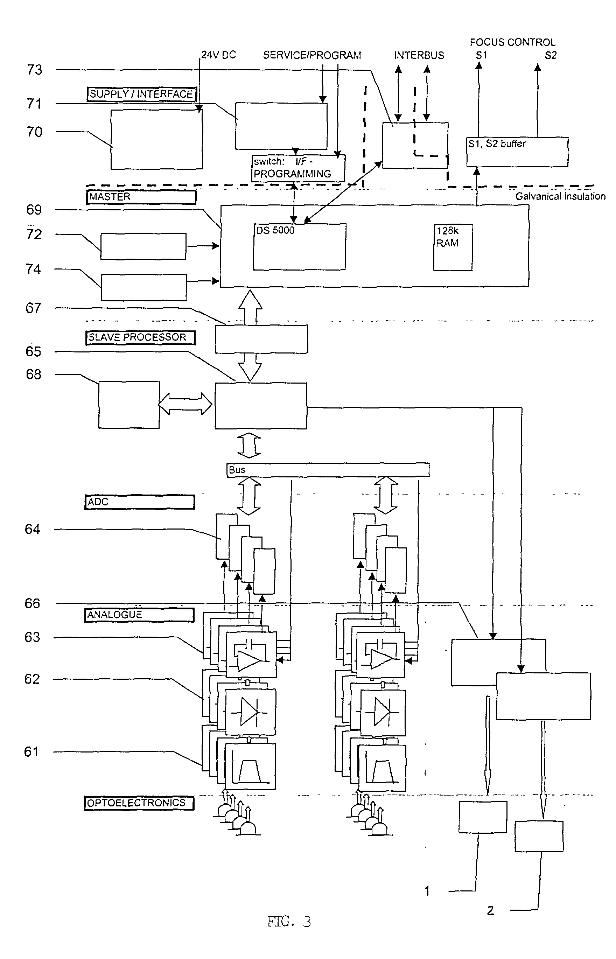

La cavité pressurisée 40 comprend trois cartes électroniques 51, 52 et 53. Le schéma électronique global est illustré à la figure 3.
Les huit détecteurs travaillent en parallèle et disposent chacun d'une chaîne électronique analogique de détection complète. Sur la carte 51, on trouve, pour chaque canal, un filtre passe-bande 61, un redresseur 62 et un amplificateur intégrateur 63. Le signal passe ensuite sur la carte 52, où on trouve, pour chaque canal, un convertisseur analogue-digital (A/D) 64 et un processeur esclave 65, par exemple de type PIC16C74. Ce dernier assure le contrôle 66 des sources laser 1 et 2, ainsi que le flux des données digitales (Dual port RAM) 67. Il contrôle également les interfaces de test 68. Enfin, sur la carte 53, figurent le processeur principal 69, par exemple de type Dallas 2252T, les alimentations 70 et les interfaces 71. Le processeur 69 effectue la réduction des données et gère les fonctions lentes telles que le contrôle de statut 73 et les capteurs d'ambiance et de flux d'air 72, 74.

### *Interfaces*

L'interfaçage électrique se fait par deux connecteurs étanches 55 et 56 (Figure 1). Le premier est utilisé pour l'alimentation électrique et pour le prélèvement des signaux de mesure et de contrôle en temps réel. Le second sert à connecter les dispositifs de test et de diagnostic.
L'interfaçage mécanique (non représenté) comprend un premier étage servant au réglage angulaire de la tête. Ce réglage est effectué une fois pour toutes lors de l'installation de l'appareil. Un second étage sert à la focalisation de la tête sur la tôle. Cet étage comporte une glissière motorisée contrôlée par le microprocesseur principal de la tête. Le signal d'erreur est fourni par un des deux détecteurs à quatre quadrants.
On montre avantageusement que le montage de cet ensemble sur une glissière latérale permet de positionner la tête et donc le point de mesure à un endroit choisi sur la largeur de la tôle. Cette glissière peut également être utilisée en continu. Le mouvement latéral correspondant, combiné avec l'avancement de la tôle, amène le point de mesure à décrire une courbe continue balayant la tôle sur toute sa longueur et toute sa largeur.

### *Traitement des données* et *étalonnage*

La rugosité moyenne $R_a$ est déterminée à partir des signaux mesurés par les détecteurs. Si $D_i$ est le signal mesuré par le détecteur i lorsque la source laser à grande incidence est activée et dj le signal mesuré par le détecteur j lorsque la source laser à faible incidence est activée, on calcule $R_a$ par la relation :

$$R_a = \Sigma A_i * D_i / \Sigma a_j * d_j .$$

Les coefficients $A_i$ et $a_j$ résultent de l'étalonnage de la tête optique pour un procédé déterminé.
Pour chaque procédé, l'utilisateur devra fournir un nombre k d'échantillons, au moins quatre, couvrant la gamme de rugosité à mesurer. Des mesures soigneuses $R_{am}$ sont effectuées sur ces échantillons et les coefficients sont déterminés par une minimisation par les moindres carrés de la somme des erreurs :

$A_i$ et $a_j$ tels que $\Sigma(R_{am}-R_{amk})^2$ soit minimum, où $R_{am}$ est le $R_a$ mesuré.

Dans la pratique, certains procédés pourront être traités par le même ensemble de coefficients. Ces coefficients sont mémorisés dans la mémoire RAM de la tête en regard du procédé auquel ils se rapportent. Ils sont utilisés en temps réel par le logiciel de réduction des données pour calculer le $R_a$ à chaque mesure.

## Revendications

1. Dispositif optoélectronique de mesure en temps réel de la lumière réfléchie et/ou diffusée par une surface essentiellement plane, en défilement, de préférence continu, comportant une tête optique, accouplée à un dispositif électromécanique de mise au point, **caractérisé en ce que** ledit dispositif est pourvu de moyens permettant :

   - d'illuminer ladite surface avec au moins deux, de préférence trois, faisceaux laser émanant de sources (1,2,3) situées dans au moins un, de préférence deux, plan(s) d'incidence, un plan d'incidence principal et un plan d'incidence secondaire respectivement, lesdits faisceaux formant au moins deux angles d'incidence différents avec la normale à ladite surface ;
   - de mesurer la lumière réfléchie et/ou diffusée par ladite surface suivant au moins 5, de préférence 8, angles.

2. Dispositif optoélectronique selon la revendication 1, **caractérisé en ce que** le plan d'incidence principal est essentiellement parallèle à la direction de défilement de ladite surface et **en ce que** le plan d'incidence secondaire est essentiellement perpendiculaire à ladite direction, les deux plans étant essentiellement perpendiculaires à la surface en défilement.

3. Dispositif optoélectronique selon la revendication 1 ou 2, **caractérisé en ce que** la direction d'un faisceau, émis par au moins une source (1,3) dans chacun des deux plans d'incidence, forme, par rapport à la normale à ladite surface, un angle, dit de faible incidence, inférieur à chacun des angles, dit de grande incidence, formés par les faisceaux correspondants aux autres sources (2).

4. Dispositif optoélectronique selon la revendication 3, **caractérisé en ce que** lesdits angles de faible incidence sont compris entre 5 et 30°.

5. Dispositif optoélectronique selon la revendication 3 ou 4, **caractérisé en ce que** lesdits angles de grande incidence sont compris entre 50 et 75°.

6. Dispositif optoélectronique selon la revendication 3 ou 4, **caractérisé en ce que** ledit angle de faible incidence est le même dans le plan d'incidence principal et dans le plan d'incidence secondaire.

7. Dispositif optoélectronique selon l'une quelconque des revendications précédentes, **caractérisé en ce que** ledit dispositif comporte au moins quatre détecteurs (10,11,12,13) situés dans le plan d'incidence principal et au moins quatre détecteurs (12,14,15,16) situés dans le plan d'incidence secondaire, la disposition de chaque détecteur définissant un angle moyen de détection par rapport à la normale à ladite surface.

8. Dispositif optoélectronique selon la revendication 7, **caractérisé en ce que**, dans chacun des deux plans :

   - un premier détecteur (12) est dirigé suivant la normale à ladite surface et est commun au plan d'incidence principal et au plan d'incidence secondaire ;
   - un deuxième détecteur (11,15) forme un angle de détection égal à l'angle de faible incidence, à l'opposé de la source (1,3) par rapport à la normale ;
   - un troisième détecteur (10,14) forme un angle de détection supérieur à l'angle de faible incidence, à l'opposé de la source (1,3) par rapport à la normale ;
   - un quatrième détecteur (13,16) forme un angle de détection supérieur à l'angle de faible incidence, de préférence égal en valeur absolue à l'angle de détection du troisième détecteur (10,14), du même côté que la source (1,3), par rapport à la normale.

9. Dispositif optoélectronique selon la revendication 8, **caractérisé en ce qu'**il comporte en outre un détecteur (17) formant un angle de détection par rapport à la normale à la surface qui est supérieur aux angles de détection des autres détecteurs (10,11,13,14,15,16) et de préférence égal à l'angle de grande incidence.

10. Dispositif optoélectronique selon l'une quelconque des revendications précédentes, **caractérisé en ce que** chaque source (1,2,3) comprend une diode laser (25), une lentille (26) et un baffle (34).

11. Dispositif optoélectronique selon la revendication 10, **caractérisé en ce que** toutes les diodes laser émettent un rayonnement à la même longueur d'onde.

**12.** Dispositif optoélectronique selon la revendication 8 ou 9, **caractérisé en ce que** ledit deuxième détecteur (11,15) est un détecteur de position, de préférence à quatre quadrants ou PSD, muni d'une lentille de focalisation (18).

**13.** Dispositif optoélectronique selon la revendication 9, **caractérisé en ce que** lesdits premier (12), troisième (10,14), quatrième (13,16) détecteur et le détecteur supplémentaire (17) sont des récepteurs au silicium avec préamplificateur incorporé.

**14.** Dispositif optoélectronique selon la revendication 12 ou 13, **caractérisée en ce que** chaque détecteur comprend en outre un filtre interférentiel (22) de bande passante centrée sur la longueur d'onde des diodes laser, de préférence une cavité noire allongée (21) usinée dans la masse (30) de la tête optique, de préférence munie d'un baffle (34) et terminée par un petit orifice (20), donnant sur la surface à mesurer.

**15.** Dispositif optoélectronique selon la revendication 14, **caractérisé en ce que** ledit dispositif comporte des moyens destinés à faire circuler un flux d'air propre dans ladite cavité (21), entre un second orifice (32) et ledit petit orifice (20) de terminaison.

**16.** Dispositif optoélectronique selon l'une quelconque des revendications précédentes, **caractérisé en ce que** la tête optique forme un ensemble solidaire avec une glissière motorisée, présentant un mouvement perpendiculaire à la surface et commandée par une boucle de contrôle PID, ladite boucle étant activée par un signal d'erreur fourni par un desdits deuxièmes détecteurs (11,15), en vue de maintenir la focalisation correcte de ladite tête.

**17.** Dispositif optoélectronique selon la revendication 16, **caractérisé en ce que** ledit ensemble est lui-même monté sur une seconde glissière motorisée dont l'axe de déplacement est parallèle à la surface en défilement et perpendiculaire au sens de défilement.

**18.** Dispositif optoélectronique selon l'une quelconque des revendications précédentes, **caractérisé en ce que** ledit dispositif comporte des moyens de traitement de mesures, de préférence d'albédo et de rugosité, utilisant une source à faible incidence (1,3) pour normaliser les signaux obtenus à partir d'au moins une source à grande incidence (2), de préférence en vue de rendre les mesures de rugosité insensibles à l'albédo de la surface.

**19.** Procédé de mesure en temps réel de la lumière réfléchie et/ou diffusée par une surface essentiellement plane, en défilement, de préférence continu, au moyen du dispositif selon l'une quelconque des revendications 8 à 18, **caractérisé en ce que**, successivement ou alternativement :

- on mesure l'albédo de ladite surface au moyen de sources de faible incidence (1,3) situées dans chaque plan d'incidence, l'angle d'incidence correspondant étant de préférence compris entre 5 et 30°;
- on mesure, au moyen d'autres sources (2), un signal proportionnel à l'albédo et contenant l'information de rugosité de ladite surface, l'information de rugosité étant obtenue en divisant ledit signal par l'albédo, l'angle d'incidence correspondant aux autres sources (2) étant de préférence compris entre 50 et 75° ;
- on utilise une source à faible incidence (1,3) combinée à un desdits deuxième détecteurs (11,15) pour obtenir une mesure de distance entre la tête optique et ladite surface en défilement ;
- on calcule le $R_a$ en faisant le rapport d'une combinaison linéaire ou d'une autre fonction quelconque des signaux obtenus, lorsque la source à grande incidence est allumée, et d'une combinaison linéaire ou une autre fonction quelconque des signaux obtenus, lorsqu'une des sources à faible incidence est allumée.

FIG. 1

FIG. 2

FIG. 3

Office européen
des brevets

**RAPPORT DE RECHERCHE EUROPEENNE**

Numéro de la demande

EP 01 87 0047

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 218 144 A (JUNGLES JOHN ET AL) 19 août 1980 (1980-08-19) * colonne 3, ligne 6 - colonne 4, ligne 13; figure 1 * | 1,19 | G01N21/89 G01N21/55 |
| A | US 3 999 864 A (MUTTER WALTER E) 28 décembre 1976 (1976-12-28) * colonne 3, ligne 12 - ligne 31 * * colonne 3, ligne 57 - ligne 66 * * colonne 4, ligne 22 - ligne 46 * * colonne 5, ligne 45 - ligne 59; figures 1,3 * | 1,19 | |
| A | US 4 184 082 A (PEOPLES PATRICK J) 15 janvier 1980 (1980-01-15) * colonne 2, ligne 54 - ligne 56 * * colonne 3, ligne 19 - ligne 30; figures 1,2 * | 1,19 | |
| A | US 4 248 537 A (SICK ERWIN) 3 février 1981 (1981-02-03) * colonne 4, ligne 27 - colonne 5, ligne 2; figures 1,7 * | 1,19 | DOMAINES TECHNIQUES RECHERCHES (Int.Cl.7) G01N |

Le présent rapport a été établi pour toutes les revendications

| Lieu de la recherche | Date d'achèvement de la recherche | Examinateur |
|---|---|---|
| LA HAYE | 9 août 2001 | Tabellion, M |

**ANNEXE AU RAPPORT DE RECHERCHE EUROPEENNE
RELATIF A LA DEMANDE DE BREVET EUROPEEN NO.**

EP 01 87 0047

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

09-08-2001

| Document brevet cité au rapport de recherche | | Date de publication | Membre(s) de la famille de brevet(s) | | Date de publication |
|---|---|---|---|---|---|
| US 4218144 | A | 19-08-1980 | DE | 2860548 D | 16-04-1981 |
| | | | EP | 0001178 A | 21-03-1979 |
| | | | GB | 2004061 A,B | 21-03-1979 |
| | | | JP | 54051575 A | 23-04-1979 |
| US 3999864 | A | 28-12-1976 | CA | 1055721 A | 05-06-1979 |
| | | | JP | 52062082 A | 23-05-1977 |
| US 4184082 | A | 15-01-1980 | AUCUN | | |
| US 4248537 | A | 03-02-1981 | DE | 2800351 A | 05-07-1979 |
| | | | FR | 2422933 A | 09-11-1979 |
| | | | GB | 2023868 A,B | 03-01-1980 |
| | | | JP | 1464676 C | 10-11-1988 |
| | | | JP | 54097475 A | 01-08-1979 |
| | | | JP | 63008420 B | 23-02-1988 |
| | | | SE | 428973 B | 01-08-1983 |
| | | | SE | 7813256 A | 05-07-1979 |

EPO FORM P0460

Pour tout renseignement concernant cette annexe : voir Journal Officiel de l'Office européen des brevets, No. 12/82